# EUROPEAN PATENT APPLICATION

(11) **EP 4 552 764 A1**
(43) Date of publication of application: **14.05.2025**
(21) Application number: 23834730.6
(22) Date of filing: 29.06.2023
(51) Int. Cl.: B21D 33/00, B21D 13/04

(54) **PRESSING ROLLER DRIVING DEVICE, AND ROLLING DEVICE FOR LITHIUM BATTERY ELECTRODE SHEET CURRENT COLLECTOR**

(30) Priority: 07.07.2022 CN 202221764052 U
(71) Applicant: Wuxi Lead Intelligent Equipment Co., Ltd., Wuxi, Jiangsu 214028 (CN)
(72) Inventor: DING, Hua, Wuxi, Jiangsu 214028 (CN); LIU, Luhua, Wuxi, Jiangsu 214028 (CN)
(74) Representative: Rau, Schneck & Hübner Patentanwälte Rechtsanwälte PartGmbB
(86) International application number: PCT/CN2023/104138
(87) International publication number: WO 2024/007963

(57) **Abstract**

The present disclosure discloses a press roller driving device and a rolling device for lithium battery pole piece current collector. The press roller driving device includes a base, a movable seat, a press roller, a floating joint, and a first driving member. The movable seat slidably engages with the base along a predetermined direction. The press roller is rotatably provided on the movable seat on its own axis. A rotation axis of the press roller intersects with the predetermined direction, and a rolling surface of the press roller has a shaping structure that protrudes and/or recesses radially to form an indentation on a product by rolling. A movable end of the first driving member is connected to the movable seat via the floating joint to drive the movable seat to move along the predetermined direction or an opposite direction of the predetermined direction; wherein, the floating joint is capable of allowing the moving seat and a movable end of the first driving member to move relative to each other at least in a direction perpendicular to the predetermined direction.

## Description

### CROSS-REFERENCE TO RELATED APPLICATIONS

The present disclosure claims priority to a Chinese patent application No. 202221764052.2 filed with the CNIPA on July 7, 2022 and entitled "PRESS ROLLER DRIVING DEVICE AND ROLLING DEVICE FOR LITHIUM BATTERY POLE PIECE CURRENT COLLECTOR", which is hereby incorporated by reference in its entirety.

### TECHNICAL FIELD

The present disclosure relates to the technical field of a lithium battery manufacturing equipment, and particularly to a press roller driving device and a rolling device for lithium battery pole piece current collector.

### BACKGROUND

In the related art, the press roller driving device may include a press roller and an air cylinder, with the press roller being rotatably provided on a piston rod of the cylinder. The press roller is configured to press the current collector against the rubber roller. During the transfer of the current collector, the press roller rolls the current collector and forms bumps (in the blank area) on the current collector, thereby enhancing the strength of the current collector.

However, in the prior art, the press roller and the rubber roller tend to vibrate relative to each other during rotation. This vibration generates radial forces on the piston rod, which reduces the service life of the cylinder.

### SUMMARY

The present disclosure aims to alleviating or solving, at least to some extent, at least one of the above mentioned problems.

In an aspect of the present disclosure, the present disclosure provides a press roller driving device, which includes a base, a movable seat, a press roller, a floating joint, and a first driving member. The movable seat slidably engages with the base along a predetermined direction; the press roller is rotatably provided on the movable seat on its own axis, a rotation axis of the press roller intersects with the predetermined direction, and a rolling surface of the press roller has a shaping structure that protrudes and/or recesses radially to form an indentation on a product by rolling; a movable end of the first driving member is connected to the movable seat via the floating joint to drive the movable seat to move along the predetermined direction or an opposite direction of the predetermined direction; wherein the floating joint is capable of allowing the moving seat and a movable end of the first driving member to move relative to each other at least in a direction perpendicular to the predetermined direction.

Optionally, the floating joint is capable of allowing the movable seat and the movable end of the first driving member to pivot relative to each other about a reference point, and/or allowing the movable seat and the movable end of the first driving member to move relative to each other in the direction perpendicular to the predetermined direction.

Optionally, the floating joint includes a first joint and a second joint. The first joint has a concave spherical surface; the second joint has a spherical head which is freely rotatably fitted into the concave spherical surface; wherein one of the first joint and the second joint is connected to the movable seat, while the other one of the first joint and the second joint is connected to the movable end of the first driving member.

Optionally, the first joint has a first surface and a second surface provided opposite to each other, which are both perpendicular to the predetermined direction and are spaced apart along the predetermined direction; a part of the second joint is located between the first surface and the second surface and slidably engages with the first surface and the second surface respectively; wherein one of the first joint and the second joint is connected to the movable seat, while the other one of the first joint and the second joint is connected to the movable end of the first driving member.

Optionally, the floating joint includes a first joint, a second joint, and a third joint. The first joint has a first surface and a second surface provided opposite to each other, which are both perpendicular to the predetermined direction and are spaced apart along the predetermined direction; a part of the second joint is located between the first surface and the second surface and slidably engages with the first surface and the second surface respectively, and the other part of the second joint has a spherical head; the third joint has a concave spherical surface, the spherical head being freely rotatably fitted into the concave spherical surface; wherein one of the first joint and the third joint is connected to the movable seat, while the other one of the first joint and the third joint is connected to the movable end of the first driving member.

Optionally, the movable seat includes a first mounting member, a second mounting member, and a third mounting member. The first mounting member slidably engages with the base along the predetermined direction; the second mounting member is connected to the first mounting member, and relative positions of the first mounting member and the second mounting member about a first reference axis are adjustable; the third mounting member is connected to the second mounting member, and relative positions of the second mounting member and the third mounting member about a second reference axis are adjustable; wherein one of the first reference axis and the second reference axis is parallel to the predetermined direction, the other one of the first reference axis and the second reference axis is perpendicular to a rotation axis of the press roller and the predetermined direction, the press roller is rotatably provided on the third mounting member on its own axis, and a driving end of the first driving member is connected to the first mounting member, the second mounting member or the third mounting member via the floating joint.

Optionally, the press roller driving device includes a fastener. Here, the first mounting member and the second mounting member are rotationally connected about the first reference axis, one of the first mounting member and the second mounting member has a first through-hole located around the first reference axis, the fastener passes through the first through-hole and detachably fixes the first mounting member to the second mounting member, with a clearance between the fastener and a side wall of the first through-hole in a circumferential direction of the first reference axis; or, the second mounting member and the third mounting member are rotationally connected about the second reference axis, one of the second mounting member and the third mounting member has a second through-hole located around the second reference axis, the fastener passes through the second through-hole and detachably fixes the second mounting member to the third mounting member, with a clearance between the fastener and a side wall of the second through-hole in a circumferential direction of the second reference axis.

Optionally, the press roller driving device includes a micrometer. Here, the micrometer is provided on one of the first mounting member and the second mounting member, a movable end of the micrometer is configured to abut against the other one of the first mounting member and the second mounting member, and a movement direction of the movable end of the micrometer is perpendicular to the first reference axis and does not cross the first reference axis; or, the micrometer is provided on one of the second mounting member and the third mounting member, a movable end of the micrometer is configured to abut against the other one of the second mounting member and the third mounting member, and a movement direction of the movable end of the micrometer is perpendicular to the second reference axis and does not cross the second reference axis.

Optionally, the press roller driving device includes a pointer. Here, the pointer is provided on one of the first mounting member and the second mounting member, the other one of the first mounting member and the second mounting member is provided with a plurality of graduations which are located around the first reference axis and provided at intervals around the first reference axis, and the pointer is configured to align with one of the graduations; or, the pointer is provided on one of the second mounting member and the third mounting member, the other one of the second mounting member and the third mounting member is provided with a plurality of graduations which are located around the second reference axis and provided at intervals around the second reference axis, and the pointer is configured to align with one of the graduations.

Optionally, the press roller driving device includes a box body and a dust cover. The box body is detachably provided on the movable seat, is located on one side of the press roller, and opens towards the press roller; the dust cover is provided on the movable seat, surrounds the press roller externally, with openings on the dust cover corresponding to both sides of the press roller that face towards and away from the box body.

Optionally, the press roller driving device includes a fixed shaft. Here, the movable seat has an assembling surface matching a peripheral contour of the fixed shaft, an opposing side of the assembling surface is unobstructed, a part of the fixed shaft conforms to the assembling surface and is detachably connected to the movable seat, and the press roller is sleeved over the fixed shaft and is rotatable around an axis of the fixed shaft.

According to another aspect of the present disclosure, the present disclosure provides a rolling device for lithium battery pole piece current collector, which includes a rack, a rubber roller, and the press roller driving device. The rubber roller is rotatably provided on the rack; the press roller in the press roller driving device is arranged parallel to and spaced from the rubber roller, and is configured to press the current collector against the rubber roller.

Optionally, the rolling device includes a second driving member. Here, the base of the press roller driving device is movably provided on the rack, and is capable of moving along an axial direction of the rubber roller, and the second driving member is configured to drive the base to move along the axial direction of the rubber roller.

Optionally, there are provided at least two press roller driving devices, two press roller driving devices are provided at intervals along the axial direction of the rubber roller, there are provided at least two second driving members, two second driving members correspond one-to-one with the two press roller driving devices, and each second driving member is configured to drive a corresponding press roller driving device to move along the axial direction of the rubber roller.

Therefore, in the press roller driving device proposed by the present disclosure, the press roller is rotatably provided on the base, the base slidably engages with the movable seat, and the first driving member drives the movable seat to move, which in turn moves the press roller. The vibration of the press roller acts on the movable seat rather than directly on the first driving member. This reduces or even eliminates the influence of the vibration on the first driving member, thereby extending its service life. In addition, the first driving member and the movable seat are connected via the floating joint, which on one hand minimizes or prevents transmission of the vibration from the movable seat to the first driving member, and on the other hand, it mitigates or even avoids the influence caused by non-parallelism between the driving direction of the first driving member and the sliding fit direction.

### BRIEF DESCRIPTION OF THE DRAWINGS

The above and/or additional aspects and advantages of the present disclosure will become apparent and easy to understand from the description of the embodiments in conjunction with the accompanying drawings, wherein:
FIG. 1 shows a top view of a to-be-processed material strip according to an embodiment of the present disclosure;
FIG. 2 shows a schematic diagram illustrating the principle of rolling the material strip according to an embodiment of the present disclosure;
FIG. 3 shows a front view of a press roller driving device according to an embodiment of the present disclosure;
FIG. 4 shows a right view of the press roller driving device according to an embodiment of the present disclosure;
FIG. 5 shows a top view of the press roller driving device according to an embodiment of the present disclosure;
FIG. 6 shows a sectional view taken along line A-A of FIG. 3;
FIG. 7 shows a sectional view of a floating joint in the press roller driving device according to an embodiment of the present disclosure;
FIG. 8 shows a sectional view of the floating joint in the press roller driving device according to another embodiment of the present disclosure;
FIG. 9 shows a sectional view taken along line B-B of FIG. 8;
FIG. 10 shows a sectional view of the floating joint in the press roller driving device according to yet another embodiment of the present disclosure;
FIG. 11 shows a perspective view of a partial structure at the press roller in the press roller driving device according to an embodiment of the present disclosure;
FIG. 12 shows a perspective view of the partial structure at the press roller in the press roller driving device according to an embodiment of the present disclosure, wherein a part of the structure of the dust cover is concealed;
FIG. 13 shows a front view of a rolling device according to an embodiment of the present disclosure;
FIG. 14 shows a right view of the rolling device according to an embodiment of the present disclosure.

### DETAILED DESCRIPTION

To make the above objectives, features, and advantages of the present disclosure more apparent and understandable, detailed descriptions of specific embodiments are provided below in conjunction with the accompanying drawings. It should be understood that the specific embodiments described here are only intended to explain the present disclosure and not limit it. Additionally, it should be noted that for ease of description, only parts relevant to the present disclosure are shown in the drawings, rather than all structures. Based on the embodiments of the present disclosure, all other embodiments obtained by those skilled in the art without making inventive efforts fall within the scope protected by the present disclosure.

Current collectors 501 are a structure used in a lithium battery for collecting current, are located on both sides of the cell, and can collect the current generated by the battery's active material to form a larger current output externally. The current collectors 501 are usually made of metal foil, such as copper or aluminum foil. Because the foil is too thin and too soft, the current collectors 501 are prone to flipping and scrapping during production. Therefore, a strengthening structure is provided on the current collectors 501 to increase the strength thereof.

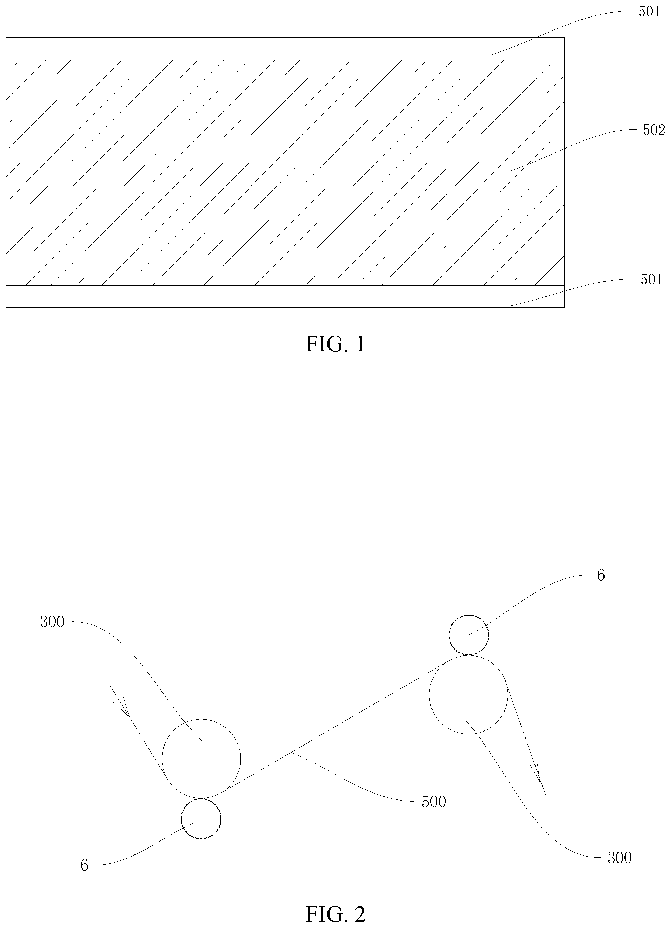

Please refer to FIGS. 1 and 2, FIG.1 shows a top view of the to-be-processed material strip 500 according to an embodiment of the present disclosure, and FIG. 2 shows a schematic diagram illustrating the principle of rolling the material strip 500 according to an embodiment of the present disclosure.

As shown in FIG. 1, the material strip 500 consists of the current collectors 501 (blank areas) at two sides and a central coating area 502. It is necessary to provide a strengthening structure on the current collector 501 to increase its strength. For example, the press roller 6 presses the current collectors 501 on the rubber roller 300, and during the transport process of the current collector 501, the press roller 6 rolls the current collector 501 and forms bumps on the current collectors 501 (blank areas), thus creating a strengthening structure.

As shown in FIG.2, the press roller 6 presses the material strip 500 against the rubber roller 300. The material strip 500 is transported by a feeding section (not shown in the figure). The press roller 6 and the rubber roller 300 are rotated in opposite directions under the pull of the material strip 500, leaving indentations on the bottom surface of the current collectors 501 during rotation. After passing between the press roller 6 and the rubber roller 300 of one set, the material strip 500 enters between the press roller 6 and the rubber roller 300 of another set, so that the indentations are formed on both the top and bottom surfaces of the current collectors 501. These indentations can form the strengthening structure of the current collectors 501, and thus reduce the risk of folding and breaking of the current collectors 501 during subsequent processing.

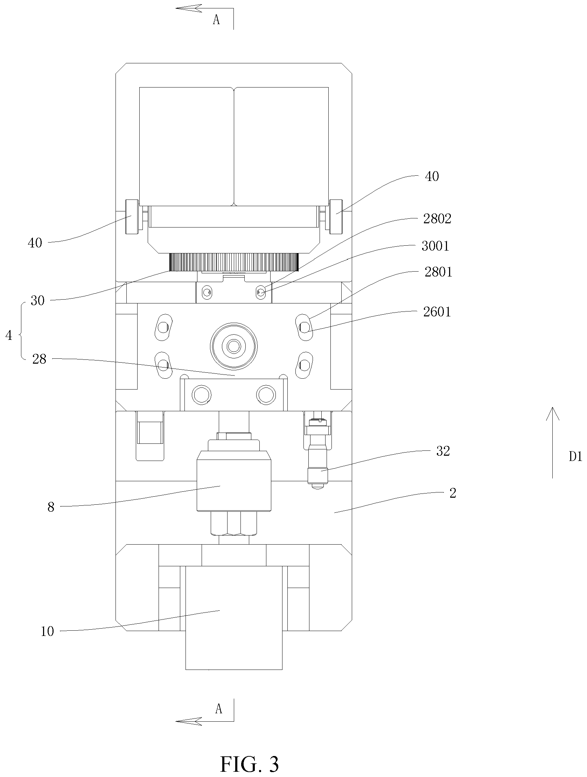

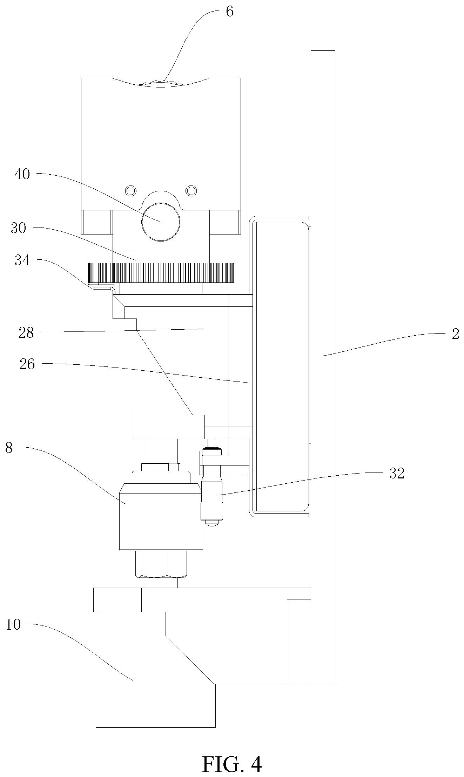

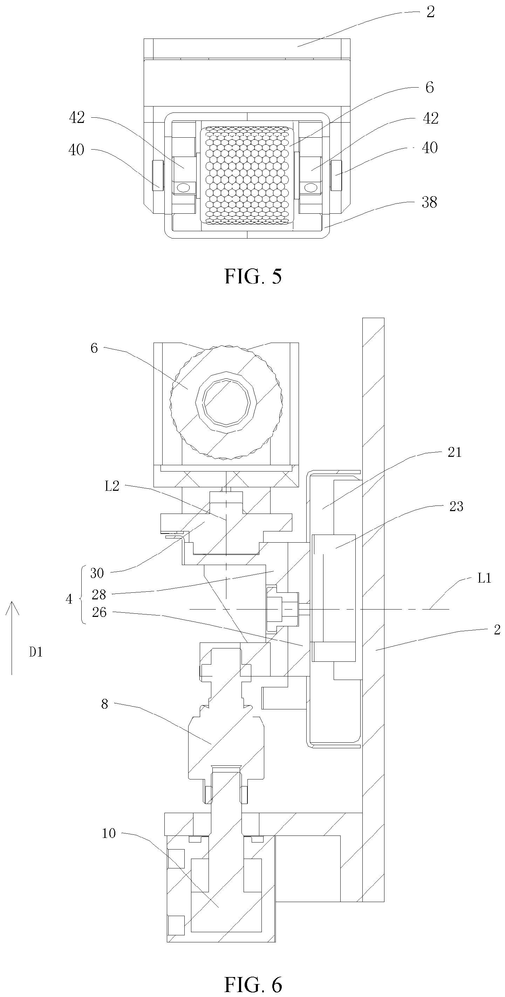

Please refer to FIGS. 3 to 6, FIGS. 3 to 5 show the front view, right view, and top view of the press roller driving device 100 according to an embodiment of the present disclosure. FIG.6 shows the cross-sectional view taken along line A-A in FIG.3.

The press roller driving device 100 includes a base 2, a movable seat 4, a press roller 6, a floating joint 8, and a first driving member 10.

The movable seat 4 slidably engages with the base 2 along a predetermined direction D1. Specifically, the base 2 has a linear rail 21 extending along the predetermined direction D1. The movable seat 4 has a slider 23, which is slidably connected to the linear rail 21 and can move along the predetermined direction D1 or an opposite direction of the predetermined direction D1.

The press roller 6 is rotatably provided on the movable seat 4 on its own axis, and the rotation axis of the press roller 6 intersects with the predetermined direction D1. In the illustrated embodiment, the rotation axis of the press roller 6 is perpendicular to the predetermined direction D1. The rolling surface of the press roller 6 has a shaping structure that protrudes and/or recesses radially to roll out indentations on the product. In the illustrated embodiment, the outer surface of the press roller 6 has continuously distributed bumps. Driven by the first driving member 10, the press roller 6 squeezes the product to form grooves on it. In other embodiments, the rolling surface of the press roller 6 may also have the grooves to form bumps on the product. In other embodiments, the rolling surface of the press roller 6 can have both the bumps and grooves.

The movable end of the first driving member 10 is connected to the movable seat 4 via the floating joint 8, and is configured to drive the movable seat 4 to move along the predetermined direction D1 or an opposite direction of the predetermined direction D1.

The floating joint 8 is capable of allowing the movable seat 4 and the movable end of the first driving member 10 to move relative to each other at least in a direction perpendicular to the predetermined direction D1.

In the above embodiment, the press roller 6 is rotatably provided on the base 2, the base 2 slidably engages with the movable seat 4, and the first driving member 10 drives the movable seat 4 to move to lead the press roller 6 to move. The vibration of the press roller 6 acts on the movable seat 4 but does not directly act on the first driving member 10, which thus reduces or even avoids the influence of the vibration on the first driving member 10 and improves the service life of the first driving member 10.

In addition, the first driving member 10 and the movable seat 4 are connected via the floating joint 8, which on the one hand reduces or even avoids the movable seat 4 from transmitting the vibration to the first driving member 10, and on the other hand, reduces or even avoids the influence caused by the fact that the driving direction of the first driving member 10 is not parallel to the sliding fit direction.

Below are several specific structures of the floating joint 8.

In one embodiment, the floating joint 8 is capable of allowing the movable seat 4 and the movable end of the first driving member 10 to pivot relative to each other about a reference point.

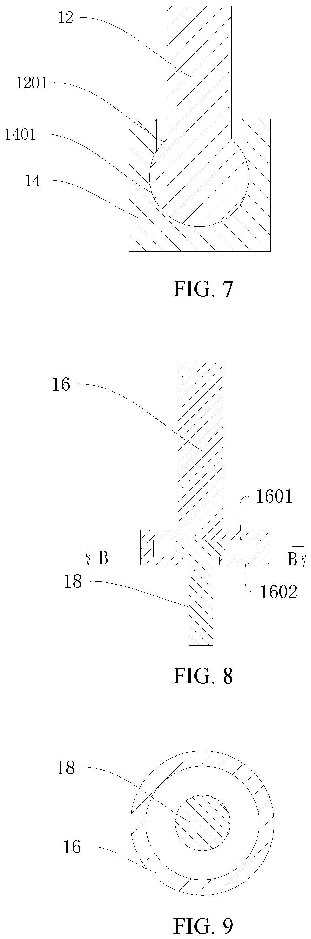

Referring to FIG.7, it shows a cross-sectional view of the floating joint 8 in the press roller driving device 100 according to an embodiment of the present disclosure.

In one embodiment, the floating joint 8 includes a first joint 14 and a second joint 12. The first joint 14 has a concave spherical surface 1401. The second joint 12 has a spherical head 1201 which is freely rotatably fitted into the concave spherical surface 1401. Specifically, the spherical head 1201 of the second joint 12 can be fitted into the concave spherical surface 1401 of the first joint 14, and can freely rotate inside it. The first joint 14 and the second joint 12 can pivot relative to each other around the center of the spherical head 1201.

One of the first joint 14 and the second joint 12 is connected to the movable seat 4, while the other is connected to the movable end of the first driving member 10. Specifically, when the first joint 14 is connected to the movable seat 4, the second joint 12 is connected to the movable end of the first driving member 10; when the first joint 14 is connected to the movable end of the first driving member 10, the second joint 12 is connected to the movable seat 4.

In one embodiment, the floating joint 8 is capable of allowing the movable seat 4 and the movable end of the first driving member 10 to move relative to each other in a direction perpendicular to the predetermined direction D1.

Refer to FIGS. 8 and 9, FIG.8 shows a cross-sectional view of the floating joint 8 in the press roller driving device 100 according to an embodiment of the present disclosure, and FIG.9 shows a cross-sectional view taken along line B-B in FIG.8.

In some embodiments, the floating joint 8 includes a first joint 16 and a second joint 18.

The first joint 16 has a first surface 1601 and a second surface 1602 provided opposite to each other, which are both perpendicular to the predetermined direction D1 and are spaced apart along the predetermined direction D1.

A part of the second joint 18 is located between the first surface 1601 and the second surface 1602, and slidably engages with the first surface 1601 and the second surface 1602 respectively.

One of the first joint 16 and the second joint 18 is connected to the movable seat 4, while the other one of the first joint 16 and the second joint 18 is connected to the movable end of the first driving member 10. Specifically, when the first joint 16 is connected to the movable seat 4, the second joint 18 is connected to the movable end of the first driving member 10; when the first joint 16 is connected to the movable end of the first driving member 10, the second joint 18 is connected to the movable seat 4.

In one embodiment, the floating joint 8 not only allows the movable seat 4 and the movable end of the first driving member 10 to pivot about a reference point, but also allows them to move relative to each other in a direction perpendicular to the predetermined direction D1.

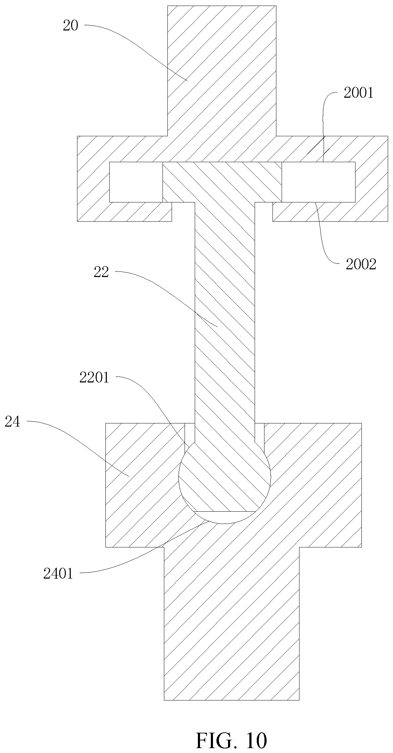

Refer to FIG.10, it shows a cross-sectional view of the floating joint 8 in the press roller driving device 100 according to an embodiment of the present disclosure.

In some embodiments, the floating joint 8 includes a first joint 20, a second joint 22, and a third joint 24.

The first joint 20 has a first surface 2001 and a second surface 2002 provided opposite to each other, which are both perpendicular to the predetermined direction D1 and are spaced apart along the predetermined direction D1.

One part of the second joint 22 is located between the first surface 2001 and the second surface 2002 and slidably engages with the first surface 2001 and the second surface 2002 respectively, and the other part of the second joint 22 has a spherical head 2201.

The third joint 24 has a concave spherical surface 2401, and the spherical head 2201 is freely rotatably fitted into the concave spherical surface 2401.

One of the first joint 20 and the third joint 24 is connected to the movable seat 4, while the other one of the first joint 20 and the third joint 24 is connected to the movable end of the first driving member 10. Specifically, when the first joint 20 is connected to the movable seat 4, the third joint 24 is connected to the movable end of the first driving member 10; when the first joint 20 is connected to the movable end of the first driving member 10, the third joint 24 is connected to the movable seat 4.

In one embodiment, the first driving member 10 is an air cylinder. In one embodiment, the first driving member 10 is an oil cylinder. In one embodiment, the first driving member 10 is a linear motor.

In one embodiment, the first driving member 10 is provided on the base 2.

The axis of the press roller 6 must be parallel to the axis of the rubber roller 300. In order to facilitate the adjustment of the axial position of the press roller 6, the present disclosure is further improved as follows.

Please refer to FIGS. 3 to 6.

In one embodiment, the movable seat 4 includes a first mounting member 26, a second mounting member 28, and a third mounting member 30.

The first mounting member 26 slidably engages with the base 2 along the predetermined direction D1.

The second mounting member 28 is connected to the first mounting member 26, and the relative positions of the first mounting member 26 and the second mounting member 28 about a first reference axis L1 are adjustable.

The third mounting member 30 is connected to the second mounting member 28, and relative positions of the second mounting member 28 and the third mounting member 30 about a second reference axis L2 are adjustable.

One of the first reference axis L1 and the second reference axis L2 is parallel to the predetermined direction D1, while the other one of the first reference axis L1 and the second reference axis L2 is perpendicular to a rotation axis of the press roller 6 and the predetermined direction D1. In the figures, the first reference axis L1 is perpendicular to the rotation axis of the press roller 6 and the predetermined direction D1, and the second reference axis L2 is parallel to the predetermined direction D1.

In the present embodiment, the press roller 6 is rotatably provided on the third mounting member 30 on its own axis.

A driving end of the first driving member 10 is connected to the first mounting member 26, the second mounting member 28 or the third mounting member 30 via the floating joint 8. In the figures, the driving end of the first driving member 10 is connected to the first mounting member 26 via the floating joint 8.

By adjusting the relative positions of the first mounting member 26 and the second mounting member 28, the press roller 6 can be made to rotate about the first reference axis L1. By adjusting the relative positions of the second mounting member 28 and the third mounting member 30, the press roller 6 can be made to rotate about the second reference axis L2.

The specific structure for making the relative positions of the first mounting member 26 and the second mounting member 28 adjustable is as follows: in one embodiment, the press roller driving device 100 includes a fastener (not shown in the figure).

The first mounting member 26 and the second mounting member 28 are rotationally connected about the first reference axis L1, one of the first mounting member 26 and the second mounting member 28 has a first through-hole 2801 located around the first reference axis L1, the fastener passes through the first through-hole 2801 and detachably fixes the first mounting member 26 to the second mounting member 28, with a clearance between the fastener and a side wall of the first through-hole 2801 in a circumferential direction of the first reference axis L1.

Specifically, in the illustrated embodiment, the first through-hole 2801 is provided on the second mounting member 28, and the threaded hole 2601 is provided on the first mounting member 26 at a position corresponding to the first through hole 2801. The fastener is a bolt that passes through the first through-hole 2801 and locks into the first mounting member 26 through the threaded hole 2601. By loosening the bolt, the relative positions of the first mounting member 26 and the second mounting member 28 can be adjusted.

The specific structure for making the relative positions of the first mounting member 26 and the second mounting member 28 adjustable is as follows: in one embodiment, the press roller driving device 100 includes a fastener (not shown in the figure).

The second mounting member 28 and the third mounting member 30 are rotationally connected about the second reference axis L2, one of the second mounting member 28 and the third mounting member 30 has a second through-hole 2802 located around the second reference axis L2, the fastener passes through the second through-hole 2802 and detachably fixes the second mounting member 28 to the third mounting member 30, with a clearance between the fastener and a side wall of the second through-hole 2802 in a circumferential direction of the second reference axis L2.

Specifically, in the illustrated embodiment, the second through-hole 2802 is provided on the second mounting member 28, and a threaded hole 3001 is provided on the third mounting member 30 at a position corresponding to the second through-hole 2802. The fastener is a bolt that passes through the second through-hole 2802 and locks into the third mounting member 30 through the threaded hole 3001. By loosening the bolt, the relative positions of the second mounting member 28 and the third mounting member 30 can be adjusted.

To accurately adjust the relative positions of the first mounting member 26 and the second mounting member 28, in one embodiment, the press roller driving device 100 includes a micrometer 32. The micrometer 32 is provided on one of the first mounting member 26 and the second mounting member 28, a movable end of the micrometer 32 is configured to abut against the other one of the first mounting member 26 and the second mounting member 28, and a movement direction of the movable end of the micrometer 32 is perpendicular to the first reference axis L1 and does not cross the first reference axis L1.

Specifically, in the illustrated embodiment, the micrometer 32 is provided on the first mounting member 26, with the movable end of the micrometer 32 configured to abut against the second mounting member 28. After releasing the fixed connection between the first mounting member 26 and the second mounting member 28, the micrometer 32 is rotated so that its movable end abuts against the second mounting member 28, causing the second mounting member 28 to rotate about the first reference axis L1. Once properly adjusted, the first mounting member 26 and the second mounting member 28 are fixedly connected.

Similarly, to accurately adjust the relative positions of the second mounting member 28 and the third mounting member 30, in one embodiment, the press roller driving device 100 includes a micrometer 32. The micrometer 32 is provided on one of the second mounting member 28 and the third mounting member 30, a movable end of the micrometer 32 is configured to abut against the other one of the second mounting member 28 and the third mounting member 30, and a movement direction of the movable end of the micrometer 32 is perpendicular to the second reference axis L2 and does not cross the second reference axis L2.

To accurately adjust the relative positions of the first mounting member 26 and the second mounting member 28, in one embodiment, the press roller driving device 100 includes a pointer 34. The pointer 34 is provided on one of the first mounting member 26 and the second mounting member 28, the other one of the first mounting member 26 and the second mounting member 28 is provided with a plurality of graduations which are located around the first reference axis L1 and provided at intervals around the first reference axis L1, and the pointer 34 is configured to align with one of the graduations.

Specifically, by rotating the second mounting member 28, the graduation position corresponds to the position of the pointer 34. By means of the pointer 34, it is possible to know the rotation angle of the second mounting member 28. Once properly adjusted, the fastener is used to fix the second mounting member 28 to the first mounting member 26.

Similarly, to accurately adjust the relative positions of the second mounting member 28 and the third mounting member 30, in one embodiment, the press roller driving device 100 includes a pointer 34. The pointer 34 is provided on one of the second mounting member 28 and the third mounting member 30, the other one of the second mounting member 28 and the third mounting member 30 is provided with a plurality of graduations which are located around the second reference axis L2 and provided at intervals around the second reference axis L2, and the pointer 34 is configured to align with one of the graduations.

The micrometer 32 and the pointer 34 function similarly. In the illustrated embodiment, the relative positions of the first mounting member 26 and the second mounting member 28 are accurately adjusted via the micrometer 32, while the relative positions of the second mounting member 28 and the third mounting member 30 are accurately adjusted via the pointer 34.

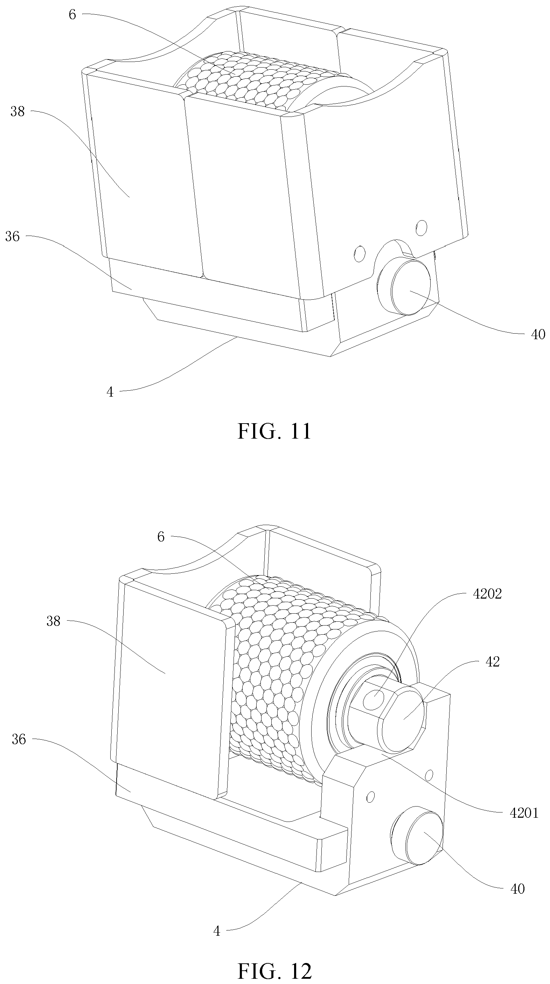

Please refer to FIGS. 11 and 12, FIG. 11 shows a three-dimensional structural diagram of a partial structure at the press roller 6 in the roller driving device 100 according to an embodiment of the present disclosure, and FIG.12 shows a schematic structural view of fig. 11 after the partial structure of the dust cover is concealed.

In some embodiments, the press roller driving device 100 includes a box body 36 and a dust cover 38.

The box body 36 is detachably provided on the movable seat 4, is located on one side of the press roller 6, and opens towards the press roller 6. Specifically, the box body 36 has a cavity that opens towards the press roller 6. In one embodiment, the box body 36 is slidably provided on the movable seat 4 in a pull-out manner and is detachably connected to the movable seat 4 via the fastener 40. The dust generated during the rolling process of the press roller 6 falls into the box body 36. When it is necessary to clean the dust inside the box body 36, the fastener is loosened to remove the box body 36.

The dust cover 38 is provided on the movable seat 4, surrounds the press roller 6 externally, with openings on the dust cover corresponding to both sides of the press roller 6 that face towards and away from the box body 36. Specifically, in the figures, the top end of the dust cover 38 is open, such that a part of the press roller 6 is exposed for rolling the product. The bottom end of the dust cover 38 is open, and corresponds to the opening of the box body 36 and is connected to the opening, allowing dust to enter the box body 36.

The present embodiment can prevent dust from polluting the working environment.

In some embodiments, the press roller driving device 100 includes a fixed shaft 42.

The movable seat 4 has an assembling surface 4201 matching a peripheral contour of the fixed shaft 42, and an opposing side of the assembling surface 4201 is unobstructed. In the figures, the assembling surface 4201 is located at the top of the movable seat 4 and forms a step-like shape.

A part of the fixed shaft 42 conforms to the assembling surface 4201 and is detachably connected to the movable seat 4. Specifically, the fixed shaft 42 is opened with a through-hole 4202, and is fixed to the movable seat 4 via the fastener. To replace the press roller 6, the fastener is loosened for replacement.

The press roller 6 is sleeved over the fixed shaft 42 and is rotatable around an axis of the fixed shaft 42.

In the present embodiment, when replacing the press roller 6, the fixed shaft 42 is replaced along with the press roller 6. The connection method between the fixed shaft 42 and the movable seat 4 facilitates the installation and removal of the fixed shaft 42.

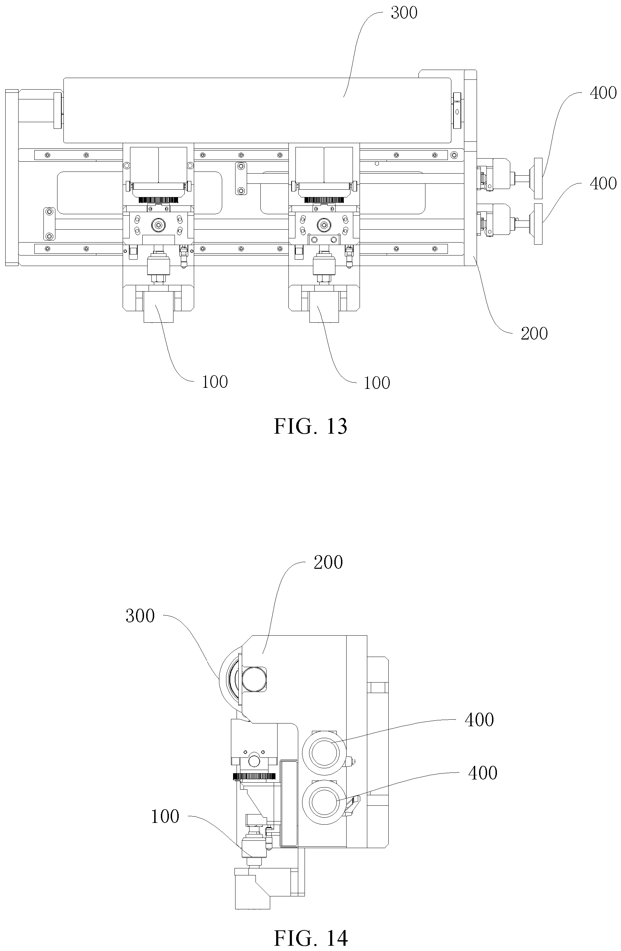

Please refer to FIGS. 13 and 14, which respectively show the front view and right view of the rolling device according to an embodiment of the present disclosure. The rolling device is used for rolling the lithium battery pole piece current collector.

The rolling device includes a rack 200, a rubber roller 300, and a press roller driving device 100.

The rubber roller 300 is rotatably provided on the rack 200.

The press roller 6 in the press roller driving device 100 is parallel to and spaced from the rubber roller 300. The press roller 6 is configured to press the current collector against the rubber roller 300. The press roller driving device 100 can be the press roller driving device 100 of any one of the above embodiments. Specifically, the material strip passes through the press roller 6 and the rubber roller 300 under the driving of the feeding section (not shown). The first driving member 10 drives the press roller 6 to move upward, so as to press the press roller 6 tightly against the rubber roller 300. Thereafter, the material strip passes between the press roller 6 and the rubber roller 300 under the driving of the feeding section, so as to leave the shape of the outer surface of the press roller 6 on the surface of the material strip during the rotation of the press roller 6 and the rubber roller 300. The shape of the outer surface of the press roller 6 can be designed as desired and is not limited herein.

Since the rolling device includes all technical features of the press roller driving device 100, it also possesses all technical effects of the press roller driving device 100, which will not be repeated herein.

In some embodiments, the rolling device includes a second driving member 400.

The base 2 of the press roller driving device 100 is movably provided on the rack 200, and is capable of moving along an axial direction of the rubber roller 300, and the second driving member 400 is configured to drive the base 2 to move along the axial direction of the rubber roller 300. Specifically, in an embodiment, the second driving member 400 is a ball screw assembly. The base 2 is connected to the mobile end of the ball screw assembly.

In some embodiments, there are provided at least two press roller driving devices 100, a plurality of press roller driving devices 100 are provided at intervals along the axial direction of the rubber roller 300, there are provided at least two second driving members 400, a plurality of second driving members 400 correspond one-to-one with two press roller driving devices 100, and each second driving member 400 is configured to drive a corresponding press roller driving device 100 to move along the axial direction of the rubber roller 300. Specifically, in the illustrated embodiment, there are two press roller driving devices 100. In other embodiments, there may be three or more press roller driving devices 100.

The above only represents the implementations of the present disclosure and should not limit the patent scope of the present disclosure. Any equivalent structural or equivalent flow transformation made using the content of the specification and drawings of the present disclosure, or directly or indirectly applied in related technical fields, shall be included within the patent protection scope of the present disclosure.

## Claims

1. A press roller driving device (100), **characterized by** comprising:
a base (2);
a movable seat (4), the movable seat (4) slidably engaging with the base (2) along a predetermined direction (D1);
a press roller (6), the press roller (6) being rotatably provided on the movable seat (4) on its own axis, a rotation axis of the press roller (6) intersecting with the predetermined direction (D1), and a rolling surface of the press roller (6) having a shaping structure that protrudes and/or recesses radially to form an indentation on a product by rolling;
a floating joint (8);
a first driving member (10), a movable end of the first driving member (10) being connected to the movable seat (4) via the floating joint (8) to drive the movable seat (4) to move along the predetermined direction (D1) or an opposite direction of the predetermined direction (D1);
wherein the floating joint (8) is capable of allowing the moving seat (4) and a movable end of the first driving member (10) to move relative to each other at least in a direction perpendicular to the predetermined direction (D1).

2. The press roller driving device (100) according to claim 1, **characterized in that**,
the floating joint (8) is capable of allowing the movable seat (4) and the movable end of the first driving member (10) to pivot relative to each other about a reference point, and/or allowing the movable seat (4) and the movable end of the first driving member (10) to move relative to each other in the direction perpendicular to the predetermined direction (D1).

3. The press roller driving device (100) according to claim 2, **characterized in that** the floating joint (8) comprises:
a first joint (14), the first joint (14) having a concave spherical surface (1401);
a second joint (12), the second joint (12) having a spherical head (1201) which is freely rotatably fitted into the concave spherical surface (1401);
wherein one of the first joint (14) and the second joint (12) is connected to the movable seat (4), while the other one of the first joint (14) and the second joint (12) is connected to the movable end of the first driving member (10).

4. The press roller driving device (100) according to claim 2, **characterized in that** the floating joint (8) comprises:
a first joint (16), the first joint (16) having a first surface (1601) and a second surface (1602) provided opposite to each other, which are both perpendicular to the predetermined direction (D1) and are spaced apart along the predetermined direction (D1);
a second joint (18), a part of the second joint (18) being located between the first surface (1601) and the second surface (1602) and slidably engaging with the first surface ( 1601 ) and the second surface ( 1602 ) respectively;
wherein one of the first joint (16) and the second joint (18) is connected to the movable seat (4), while the other one of the first joint (16) and the second joint (18) is connected to the movable end of the first driving member (10).

5. The press roller driving device (100) according to claim 2, **characterized in that** the floating joint (8) comprises:
a first joint (20), the first joint (20) having a first surface (2001) and a second surface (2002) provided opposite to each other, which are both perpendicular to the predetermined direction (D1) and are spaced apart along the predetermined direction (D1);
a second joint (22), a part of the second joint (22) being located between the first surface (2001) and the second surface (2002) and slidably engaging with the first surface (2001) and the second surface (2002) respectively, and the other part of the second joint (22) having a spherical head (2201);
a third joint (24), the third joint (24) having a concave spherical surface (2401), the spherical head (2201) being freely rotatably fitted into the concave spherical surface (2401);
wherein one of the first joint (20) and the third joint (24) is connected to the movable seat (4), while the other one of the first joint (20) and the third joint (24) is connected to the movable end of the first driving member (10).

6. The press roller driving device (100) according to any one of claims 1 to 5, **characterized in that** the movable seat (4) comprises:
a first mounting member (26), the first mounting member (26) slidably engaging with the base (2) along the predetermined direction (D1);
a second mounting member (28), the second mounting member (28) being connected to the first mounting member (26), and relative positions of the first mounting member (26) and the second mounting member (28) about a first reference axis (L1) being adjustable;
a third mounting member (30), the third mounting member (30) being connected to the second mounting member (28), and relative positions of the second mounting member (28) and the third mounting member (30) about a second reference axis (L2) being adjustable;
wherein one of the first reference axis (L1) and the second reference axis (L2) is parallel to the predetermined direction (D1), while the other one of the first reference axis (L1) and the second reference axis (L2) is perpendicular to a rotation axis of the press roller (6) and the predetermined direction (D1), the press roller (6) is rotatably provided on the third mounting member (30) on its own axis, and a driving end of the first driving member (10) is connected to the first mounting member (26), the second mounting member (28) or the third mounting member (30) via the floating joint (8).

7. The press roller driving device (100) according to claim 6, **characterized by** comprising:
a fastener (40);
wherein the first mounting member (26) and the second mounting member (28) are rotationally connected about the first reference axis (L1), one of the first mounting member (26) and the second mounting member (28) has a first through-hole (2801) located around the first reference axis (L1), the fastener (40) passes through the first through-hole (2801) and detachably fixes the first mounting member (26) to the second mounting member (28), with a clearance between the fastener (40) and a side wall of the first through-hole (2801) in a circumferential direction of the first reference axis (L1), or
the second mounting member (28) and the third mounting member (30) are rotationally connected about the second reference axis (L2), one of the second mounting member (28) and the third mounting member (30) has a second through-hole (2802) located around the second reference axis (L2), the fastener (40) passes through the second through-hole (2802) and detachably fixes the second mounting member (28) to the third mounting member (30), with a clearance between the fastener (40) and a side wall of the second through-hole (2802) in a circumferential direction of the second reference axis (L2).

8. The press roller driving device (100) according to claim 6, **characterized by** comprising:
a micrometer (32);
wherein the micrometer (32) is provided on one of the first mounting member (26) and the second mounting member (28), a movable end of the micrometer (32) is configured to abut against the other one of the first mounting member (26) and the second mounting member (28), and a movement direction of the movable end of the micrometer (32) is perpendicular to the first reference axis (L1) and does not cross the first reference axis (L1), or,
the micrometer (32) is provided on one of the second mounting member (28) and the third mounting member (30), a movable end of the micrometer (32) is configured to abut against the other one of the second mounting member (28) and the third mounting member (30), and a movement direction of the movable end of the micrometer (32) is perpendicular to the second reference axis (L2) and does not cross the second reference axis (L2).

9. The press roller driving device (100) according to claim 6, **characterized by** comprising:
a pointer (34);
wherein the pointer (34) is provided on one of the first mounting member (26) and the second mounting member (28), the other one of the first mounting member (26) and the second mounting member (28) is provided with a plurality of graduations which are located around the first reference axis (L1) and provided at intervals around the first reference axis (L1), and the pointer (34) is configured to align with one of the graduations, or,
the pointer (34) is provided on one of the second mounting member (28) and the third mounting member (30), the other one of the second mounting member (28) and the third mounting member (30) is provided with a plurality of graduations which are located around the second reference axis (L2) and provided at intervals around the second reference axis (L2), and the pointer (34) is configured to align with one of the graduations.

10. The press roller driving device (100) according to any one of claims 1 to 9, **characterized by** comprising:
a box body (36), the box body (36) being detachably provided on the movable seat (4), located on one side of the press roller (6), and opening towards the press roller (6);
a dust cover (38), the dust cover (38) being provided on the movable seat (4), surrounding the press roller (6) externally, with openings on the dust cover corresponding to both sides of the press roller (6) that face towards and away from the box body (36).

11. The press roller driving device (100) according to any one of claims 1 to 10, **characterized by** comprising:
a fixed shaft (42);
wherein the movable seat (4) has an assembling surface (4201) matching a peripheral contour of the fixed shaft (42), an opposing side of the assembling surface (4201) is unobstructed, a part of the fixed shaft (42) conforms to the assembling surface (4201) and is detachably connected to the movable seat (4), and the press roller (6) is sleeved over the fixed shaft (42) and is rotatable around an axis of the fixed shaft (42).

12. A rolling device for a lithium battery pole piece current collector (501), **characterized by** comprising:
a rack (200);
a rubber roller (300), the rubber roller (300) being rotatably provided on the rack (200);
the press roller driving device (100) according to any one of claims 1 to 11, wherein the press roller (6) in the press roller driving device (100) is arranged parallel to and spaced from the rubber roller (300), and is configured to press the current collector (501) against the rubber roller (300).

13. The rolling device according to claim 12, **characterized in that**,
a second driving member (400);
wherein the base (2) of the press roller driving device (100) is movably provided on the rack (200), and is capable of moving along an axial direction of the rubber roller (300), and the second driving member (400) is configured to drive the base (2) to move along the axial direction of the rubber roller (300).

14. The rolling device according to claim 13, **characterized in that**,
there are provided at least two press roller driving devices (100), two press roller driving devices (100) are provided at intervals along the axial direction of the rubber roller (300), there are provided at least two second driving members (400), two second driving members (400) correspond one-to-one with the two press roller driving devices (100), and each second driving member (400) is configured to drive a corresponding press roller driving device (100) to move along the axial direction of the rubber roller (300).
